# EUROPÄISCHE PATENTSCHRIFT

(11) **EP 3 118 163 B1**
(45) Veröffentlichungstag und Bekanntmachung des Hinweises auf die Patenterteilung: **11.03.2020**
(21) Anmeldenummer: 16152195.0
(22) Anmeldetag: 21.01.2016
(51) Int. Cl.: C02F 1/28, B01D 39/00, B01J 20/02, B01J 20/34, B01J 20/32, C02F 1/00, C02F 5/00, C02F 1/467, B01J 49/50, C02F 1/42

(54) **VORRICHTUNG ZUR WASSERBEHANDLUNG SOWIE VERFAHREN ZUR REGENERIERUNG EINER WASSERBEHANDLUNGSVORRICHTUNG**
DEVICE FOR WATER TREATMENT AND METHOD FOR REGENERATING A WATER TREATMENT DEVICE
DISPOSITIF DE TRAITEMENT DE L'EAU ET PROCEDE DE REGENERATION D'UN DISPOSITIF DE TRAITEMENT DE L'EAU

(30) Priorität: 14.07.2015 DE 102015111413
(43) Veröffentlichungstag der Anmeldung: 18.01.2017
(73) Patentinhaber: Grünbeck Wasseraufbereitung GmbH, 89420 Höchstädt a.d. Donau (DE)
(72) Erfinder: Söcknick, Ralf, 70806 Kornwestheim (DE); Kessler, Norbert, 86405 Ostendorf/ Meitingen (DE); Vogl, Bernd, 86609 Donauwörth (DE)
(74) Vertreter: Charrier Rapp & Liebau

(56) Entgegenhaltungen:
- DE-A1- 3 826 857
- DE-A1-102008 052 959
- DE-B3-102007 059 058
- DE-U1-202014 100 427
- US-A1- 2003 196 960
- US-A1- 2008 035 548
- US-A1- 2008 173 583
- US-A1- 2014 027 288

## Beschreibung

Die Erfindung betrifft eine Vorrichtung zur Wasserbehandlung mit mindestens einem ersten Keimfilter und einer Wasserenthärtungseinrichtung mit einem Ionenaustauscherharz. Die Erfindung betrifft ferner ein Verfahren zur Regenerierung des wenigstens einen Keimfilters und des Ionenaustauscherharzes der Wasserenthärtungseinrichtung.

Aus dem Stand der Technik sind Wasserbehandlungsanlagen bekannt, welche zur Reinigung und Enthärtung von Rohwasser Wasserbehandlungselemente aufweisen, beispielsweise in Form von Ionentauscherharzen und Filtern. Aus der DE 10 2012 007 579 A1 ist beispielsweise eine Wasserbehandlungsanlage sowie ein Verfahren zu deren Betrieb bekannt, wobei die Wasserbehandlungsanlage mehrere parallel betreibbare und mit einem Wasserbehandlungselement bestückte Behälter aufweist. Ein solcher Behälter kann dabei mehrere Wasserbehandlungselemente beinhalten, beispielsweise in Form von Ionentauscherharzen und Filterelementen. Da die Wasserbehandlungselemente nach längerem Gebrauch erschöpfen, ist eine Regenerierung der Wasserbehandlungselemente erforderlich. Hierfür ist vorgesehen, dass sich jeder Behälter entweder in einem Normalbetrieb (zur Wasserbehandlung) oder in einem Regenerationsbetrieb befindet, wobei ein sich im Regenerationsbetrieb befindlicher Behälter von einer Regeneriermittellösung durchströmt wird und sich bevorzugt immer mindestens einer der Behälter im Normalbetrieb befindet. Wenn es sich bei dem in einem Behälter enthaltenen Wasserbehandlungselement um ein Ionenaustauscherharz zur Enthärtung des Rohwassers handelt, wird zur Regenerierung des nach längerem Gebrauch erschöpften Ionenaustauscherharzes im Regenerationsbetrieb eine Regeneriermittellösung in Form einer Kochsalzlösung über das Ionenaustauscherharz geleitet. Dabei wird das Ionenaustauscherharz mit Natrium-Ionen beladen und ist nach erfolgter Regenerierung wieder in der Lage, in dem Rohwasser enthaltene und gelöste Calcium- und Magnesium-Ionen durch Natrium-Ionen zu ersetzen, um so die Härtebildner (Calcium- und Magnesium-Ionen) aus dem Rohwasser zu entfernen. Alternativ oder zusätzlich zu dem Ionenaustauscherharz können dabei Filter als Wasserbehandlungselemente vorgesehen sein. Auch die Filter müssen zur Aufrechterhaltung ihrer Filtrierwirkung regelmäßig regeneriert werden, was beispielsweise durch Rückspülen oder Behandeln mit einer Regeneriermittellösung erfolgen kann. Die Regenerierung des Ionenaustauscherharzes und der Filter muss dabei getrennt voneinander erfolgen.

Aus dem Stand der Technik sind weiterhin Wasserbehandlungseinrichtungen bekannt, welche Wasserbehandlungselemente enthalten, die eine Mischung aus Aktivkohle und einem Ionenaustauscherharz und gegebenenfalls noch Zusatzstoffe zur Entkeimung des Rohwassers enthalten, wie zum Beispiel Silber oder Silberionen. Die Aktivkohle absorbiert dabei unerwünschte organische Bestandteile des Rohwassers, einschließlich Mikroorganismen, wie zum Beispiel Bakterien und Viren, während das Ionenaustauscherharz eine Enthärtung des Rohwassers bewirkt. Zur Regenerierung des Filters muss das Filtermaterial ausgetauscht werden. Dies ist umständlich und zeitaufwändig.

Aus der US 2008/0173583 A1 ist ein Wasserbehandlungssystem und ein Verfahren zur Wasserreinigung bekannt, in denen eine Vorbehandlung des Wassers in einem Harzgemisch aus anionischen und kationischen Ionenaustauscherharzen und eine an die Vorbehandlung anschließende Umkehrosmosebehandlung erfolgt. Die Harzkomponenten des Harzgemisches sollen dabei mit einer einzigen Regeneriermittellösung regeneriert werden.
Aus der US 2008/0035548 A1 ist ein Wasserreinigungssystem bekannt, in dem poröse, Mikrokanäle enthaltende Elektroden aus Graphit einem Metalloxid und einem Ionenaustauscher eingesetzt werden, wobei zwischen den sich gegenüberliegenden Elektroden ein permeabler Separator angeordnet ist, so dass das zu behandelnde Wasser von einer Elektrode durch den Separator zur anderen Elektrode fließen kann.

Der Erfindung liegt die Aufgabe zu Grunde, eine Vorrichtung zur Wasserbehandlung aufzuzeigen, welche in der Lage ist, jederzeit desinfiziertes, insbesondere sterilisiertes und enthärtetes Wasser bereit zu stellen und welche eine effiziente und einfache Regenerierung der Wasserbehandlungselemente zur Desinfizierung und Enthärtung des Rohwassers ermöglicht. Eine weitere Aufgabe der Erfindung besteht darin, ein möglichst effizientes Verfahren zur Regenerierung der Wasserbehandlungselemente der Vorrichtung aufzuzeigen.

Diese Aufgaben werden mit einer Vorrichtung zur Wasserbehandlung mit den Merkmalen des Anspruchs 1 und einem Verfahren zur Regenerierung der Wasserbehandlungselemente der Vorrichtung mit den Merkmalen des Anspruchs 11 gelöst.

Die erfindungsgemäße Vorrichtung zur Wasserbehandlung umfasst mehrere Wasserbehandlungselemente, nämlich mindestens einen ersten Keimfilter und eine Wasserenthärtungseinrichtung, welche ein regenerierbares Ionenaustauscherharz enthält. Bei dem Keimfilter handelt es sich um einen regenerierbaren Adsorptionsfilter, an dem sich in dem zu behandelnden Wasser enthaltene Mikroorganismen, insbesondere Viren oder Bakterien wie Legionellen und Psedomonaden, durch elektrostatische Absorption anlagern. Die Wasserenthärtungseinrichtung und der Keimfilter stehen dabei mit einem Regeneriermittelreservoir in Verbindung, wobei ein in dem Regeneriermittelreservoir bevorratetes Regeneriermittel in einer Regenerierphase sowohl der Wasserenthärtungseinrichtung als auch dem wenigstens einen Keimfilter zugeführt wird, um das Ionenaustauscherharz der Wasserenthärtungseinrichtung und den Keimfilter zu regenerieren.
In einem bevorzugten Ausführungsbeispiel der Erfindung ist neben dem ersten Keimfilter noch ein zweiter Keimfilter vorgesehen, wobei die beiden Keimfilter jeweils ein Filtermaterial mit elektroaktivem Potential (Zeta-Potential) aufweisen und zweckmäßig parallel geschaltet und die Wasserenthärtungseinrichtung in Serie zur Parallelschaltung der beiden Keimfilter angeordnet ist. Die beiden Keimfilter können dabei im Pendelbetrieb zusammen mit der Wasserenthärtungseinrichtung betrieben werden. Während sich ein Keimfilter in einer Regenerierphase befindet, kann der andere Keimfilter weiter im Filterbetrieb betrieben werden. Auf diese Weise wird sicher gestellt, dass die Vorrichtung zu jeder Zeit desinfiziertes und enthärtetes Wasser bereit stellen kann. Das der Vorrichtung zugeführte Rohwasser wird dabei in wenigstens einem der Keimfilter durch Elektroadsorption desinfiziert, indem sich die im Wasser enthaltenen und elektrostatisch geladenen Bakterien oder Viren an einem Filtermaterial des Keimfilters anlagern.
Das mittels des bzw. der Keimfilter desinfizierte Wasser wird zur Enthärtung durch das Ionenaustauscherharz der Wasserenthärtungseinrichtung geleitet, wobei das Rohwasser zweckmäßig zuerst in wenigstens einem der beiden Keimfilter desinfiziert und anschließend durch das Ionenaustauscherharz der Wasserenthärtungseinrichtung geleitet wird. Auf diese Weise wird einer Verkeimung des Ionenaustauscherharzes vorgebeugt, indem nur desinfiziertes und weitgehend keimfreies Wasser in das Ionenaustauscherharz eingeleitet wird. Es ist jedoch auch möglich, die Reihenfolge der Wasserbehandlungselemente in Durchlaufrichtung des Wassers während der Betriebsphase der Vorrichtung anders anzuordnen, also das Rohwasser zunächst durch die Wasserenthärtungseinrichtung und danach stromabwärts durch den oder die Keimfilter zu leiten. Im Falle von mehreren Keimfiltern können diese bevorzugt parallel, aber auch alternierend geschaltet sein.

Erfindungsgemäße weisen der erste Keimfilter und/oder der zweite Keimfilter ein elektroaktives Filtermaterial mit einem in wässriger Umgebung elektrokinetischen, insbesondere elektropositiven Potential (ZETA-Potenzial) auf. Die regelmäßig negativ geladenen Mikroorganismen, die sich im Rohwasser befinden, können daher durch elektrostatische Adsorption am Filtermaterial der Keimfilter angelagert und gebunden werden.

Bei dem Filtermaterial des oder der Keimfilter handelt es sich bevorzugt um einen elektropositiven Textil-Verbundstoff. Das Filtermaterial kann ein Metalloxid, insbesondere Aluminumoxid und/oder Aluminumhydroxid und/oder Böhmit und/oder Zirkonoxid und/oder Zirkoniumhydroxid, und/oder ein Silikat, insbesondere Aluminium- oder Calcium-Silikat, enthalten. Zweckmäßig besteht das Filtermaterial aus einem Gemisch von Mikro- oder Nanoteilchen oder -Fasern eines Metalloxids mit einem Trägermaterial, insbesondere aus Polymer-, Carbon- oder Glasfasern oder einer Mischung davon. Das Filtermaterial kann auch ein keramisches Trägermaterial aufweisen, welches mit einer Beschichtung versehen ist, die ein Metalloxid und/oder ein Metallhydroxid enthält.

Es hat sich überraschend gezeigt, dass solche Keimfilter, welche in der Lage sind elektrostatisch geladene Mikroorganismen durch Elektroadsorption zu binden, auf einfache Weise regeneriert werden können, indem eine chlorhaltige Regenerierlösung durch das Filtermaterial geleitet wird. Dies ermöglicht es, den oder die Keimfilter der erfindungsgemäßen Vorrichtung in einem einzigen Regenerierschritt bzw. in einer einzigen Regenerierphase zusammen mit dem Ionenaustauscherharz der Wasserenthärtungseinrichtung zu Regenerieren.

Zur Regenerierung des oder der Keimfilter und des Ionenaustauscherharzes der Wasserenthärtungseinrichtung ist in der erfindungsgemäßen Vorrichtung eine Regeneriereinrichtung vorgesehen, welche ein Regeneriermittelreservoir umfasst, das mit der Wasserenthärtungseinrichtung und den Keimfiltern in Verbindung steht. In dem Regeneriermittelreservoir ist ein Regeneriermittel enthalten, welches in einer Regenerierphase sowohl der Wasserenthärtungseinrichtung als auch wenigstens einem der Keimfilter zugeführt wird, um das Ionenaustauscherharz der Wasserenthärtungseinrichtung und das Filtermaterial des jeweiligen Keimfilters zu regenerieren. Bei dem im Regeneriermittelreservoir bevorrateten Regeneriermittel handelt es sich umeine wässrige Lösung eines Chloridsalzes welches einerseits in der Lage ist, erschöpftes Ionenaustauscherharz der Wasserenthärtungseinrichtung und andererseits das Filtermaterial der Keimfilter zu regenerieren, bspw. indem in dem Filtermaterial angelagerte Mikroorganismen abgelöst werden. In einem bevorzugten Ausführungsbeispiel handelt es sich bei dem im Regeneriermittelreservoir bevorrateten Regeneriermittel um eine gesättigte Kochsalzsole. Erfindungsgemäß ist dabei das Regeneriermittelreservoir mit einer Elektrolyseeinrichtung gekoppelt. Die Elektrolyseeinrichtung setzt dabei eine wässrige und konzentrierte Lösung des im Regeneriermittelreservoir bevorrateten Regeneriermittels (wässrige Lösung des Chloridsalzes) in eine wässrige Regenerierlösung um, welche Alkali- oder Erdalkali-Ionen und Chloridionen sowie im Wasser als hypochlorige Säure dissoziiertes Chlorgas enthält. Die von der Elektrolyseeinrichtung erzeugte Regenerierlösung wird in einer Regenerierphase einem der beiden Keimfilter (oder auch beiden Keimfiltern) und der Wasserenthärtungseinrichtung zugeführt. Die in der Regenerierlösung gelösten Alkali- oder Erdalkali-Ionen, insbesondere Natrium-Ionen aus einer gesättigten Kochsalzsohle, verdrängen die vom Ionenaustauscherharz beim Betrieb der Vorrichtung aufgenommenen härtebildenden Kalzium- und Magnesium-Ionen und stellen dadurch die Enthärtungskapazität der Wasserenthärtungseinrichtung wieder her. Das in der Regenerierlösung dissoziierte Chlorgas sowie die in der Regenerierlösung gelösten Ionen bewirken in der Regenerierphase gleichzeitig eine Regenerierung des Filtermaterials des Keimfilters, indem die dort angelagerten Mikroorganismen abgetötet und/oder vom Filtermaterial abgelöst werden. Eine Ablösung der am Filtermaterial elektrostatisch adsorbierten Mikroorganismen erfolgt dabei wahrscheinlich aufgrund elektrostatischer Verdrängungseffekte, welche dazu führen, dass die elektrostatische Anziehung der Mikroorganismen an das Filtermaterial gelöst oder zumindest soweit reduziert wird, dass sich die adsorbierten Mikroorganismen vom Filtermaterial ablösen können. Dadurch ist es mit der erfindungsgemäßen Vorrichtung und in dem erfindungsgemäßen Verfahren möglich, sowohl das Ionenaustauscherharz der Wasserenthärtungseinrichtung als auch das Filtermaterial der Keimfilter in einer einzigen Regenerierphase und damit auf sehr effiziente sowie zeit- und kostensparende Weise zu regenerieren.

In dem erfindungsgemäßen Verfahren schließt sich an die Regenerierphase bevorzugt eine Spülphase an, in der das in den Leitungen, der Wasserenthärtungseinrichtung und in dem regenerierten Keimfilter enthaltene Regeneriermittel durch Einleiten einer Spülflüssigkeit (bspw. Spülwasser) ausgespült wird, wobei die durch die Wasserenthärtungseinrichtung und den einen Keimfilter geleitete Spülflüssigkeit über einen Abwasserkanal zur Entsorgung abgeführt werden kann. Bei der Spülflüssigkeit kann es sich bspw. um desinfiziertes Rohwasser handeln, welches während der Regenerierphase oder der Spülphase durch den anderen Keimfilter geleitet worden ist. Dabei ist es zweckmäßig, wenn der in der Regenerierphase regenerierte erste Keimfilter in der Spülphase mit Rohwasser zur Erzeugung eines Erstfiltrats gespült wird und das aus dem (regenerierten) ersten Keimfilter strömende Erstfiltrat anschließend in die Wasserenthärtungseinrichtung geleitet wird, um das Ionenaustauscherharz zu spülen. Auch hier wird das aus der Wasserenthärtungseinrichtung ausströmende Erstfiltrat zweckmäßig zur Entsorgung in einen Abwasserkanal abgeleitet, da das Erstfiltrat noch mit der wässrigen Regenerierlösung bzw. der Spülflüssigkeit belastet sein kann.

Diese und weitere Vorteile der erfindungsgemäßen Vorrichtung zur Wasserbehandlung und des erfindungsgemäßen Verfahrens zu deren Regenerierung ergeben sich aus den nachfolgend unter Bezugnahme auf die begleitenden Zeichnungen näher beschriebenen Ausführungsbeispielen. Die Zeichnungen zeigen:
- **Fig. 1:**: Schematische Darstellung eines ersten Ausführungsbeispiels einer erfindungsgemäßen Vorrichtung zur Wasserbehandlung;
- **Fig. 2:**: Schematische Darstellung verschiedener Phasen beim Betrieb und der Regenerierung der Vorrichtung von Figur 1 (Betriebsphase und Regenerierphase);
- **Fig. 3:**: Schematische Darstellung eines zweiten Ausführungsbeispiels einer erfindungsgemäßen Vorrichtung zur Wasserbehandlung.

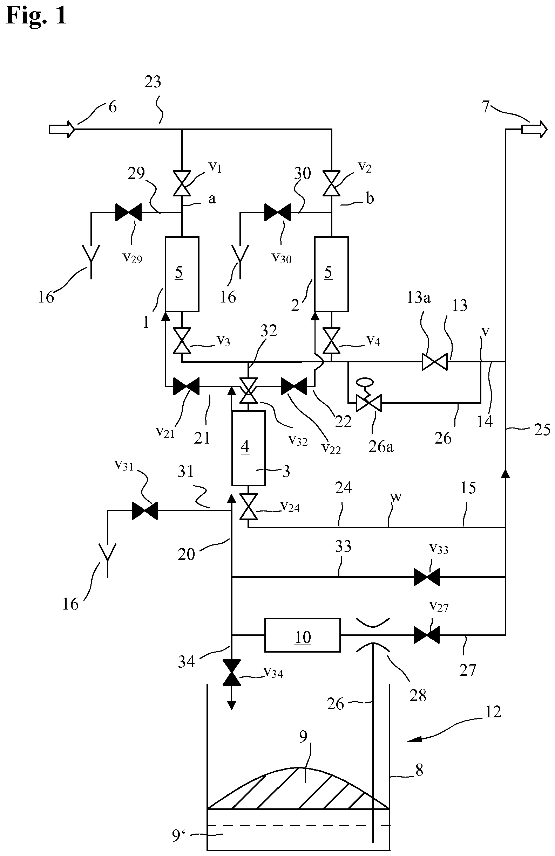

In Fig. 1 ist schematisch ein Ausführungsbeispiel einer erfindungsgemäßen Vorrichtung zur Wasserbehandlung in einer Betriebsphase gezeigt. Die Vorrichtung umfasst einen Rohwasserzulauf 6 und einen Produktwasserablauf 7. Wenn im folgenden von einer Strömungsrichtung und insbesondere von stromaufwärts bzw. stromabwärts gesprochen wird, bezieht sich dies auf die Strömungsrichtung des zu behandelnden Rohwassers vom Rohwasserzulauf 6 zum Produktwasserablauf 7. Die Vorrichtung umfasst weiterhin einen ersten Keimfilter 1 und einen zweiten Keimfilter 2, welche in einer Parallelschaltung angeordnet sind. Jeder der beiden Keimfilter 1, 2 enthält ein Filtermaterial 5, welches in wässriger Umgebung und insbesondere im pH-Bereich von 5 bis 8 ein elektrokinetisches Potential (Zeta-Potential) aufweist. Geeignete Filtermaterialien mit einem in wässriger Umgebung elektrokinetischen, insbesondere elektropositiven Potential wurden eingangs bereits beschrieben. Das Filtermaterial 5 des ersten Keimfilters 1 und des zweiten Keimfilters 2 ist dabei zweckmäßig in einer austauschbaren Filterkartusche enthalten. Die Vorrichtung umfasst weiterhin eine Wasserenthärtungseinrichtung 3 mit einem regenerierbaren Ionenaustauscherharz 4 sowie eine Regeneriereinrichtung 12.

Die Vorrichtung von Figur enthält zur Verbindung der beiden Keimfilter 1, 2, der Wasserenthärtungseinrichtung 3 und der Regeneriereinrichtung 12 folgende Leitungen, welche als Rohr- oder Schlauchleitungen ausgebildet sein können, und folgende Ventile zum Öffnen und Schließen der Leitungen (die gezeigten Ventile sind dabei schwarz eingezeichnet, wenn das Ventil geschlossen ist und weiß bei geöffnetem Ventil):
Die Parallelschaltung der beiden Keimfilter 1, 2 ist über eine Zufuhrleitung 23 mit dem Rohwasserzulauf 6 verbunden. Über den Rohwasserzulauf 6 wird der Parallelschaltung der beiden Keimfilter 1, 2 unter Druck stehendes Rohwasser zugeführt und in einer Filtrierrichtung durch den ersten Keimfilter 1 und den zweiten Keimfilter 2 geleitet. Aufgrund des elektrokinetischen Potentials des Filtermaterials 5 der beiden Keimfilter 1, 2 werden dabei im Rohwasser enthaltene und elektrostatisch geladene Mikroorganismen, wie z. B. Viren und Keime, insbesondere Legionellen und Pseudomonaden, durch Elektroadsorption an dem Filtermaterial 5 der beiden Keimfilter 1, 2 adsorbiert und dadurch aus dem Rohwasser entfernt. In der Parallelschaltung der Keimfilter 1, 2 ist sowohl stromaufwärts als auch stromabwärts jeweils ein Ventil V1, V2 bzw. V3, V4 vorgesehen. Stromaufwärts der Keimfilter ist in jedem Zweig (a, b) der Parallelschaltung eine Abzweigleitung 29, 30 vorgesehen, welche in einen Abwasserkanal 16 mündet.

Stromabwärts der Parallelschaltung der beiden Keimfilter 1, 2 ist die Wasserenthärtungseinrichtung 3 über eine Verbindungsleitung 32 mit einem Ventil 32a mit der Parallelschaltung der beiden Keimfilter 1, 2 verbunden. Das in den beiden Keimfiltern 1, 2 durch Elektroadsorption desinfizierte Rohwasser wird einem Zulauf der stromabwärts angeordneten Wasserenthärtungseinrichtung 3 über die Verbindungsleitung 32 zugeführt, um das Rohwasser, das härtebildende Ionen (insbesondere Kalzium- und Magnesiumionen) enthält, zu enthärten. Hierfür enthält die Wasserenthärtungseinrichtung 3 ein Ionenaustauscherharz 4, welche beim Durchleiten des (desinfizierten) Rohwassers die härtebildenden Ionen (insb. Magnesium- und Kalzium-Ionen) an dem Ionenaustauscherharz binden und somit aus dem harten Rohwasser entfernen. Die Wasserenthärtungseinrichtung 3 verfügt über einen Ablauf, an dem das enthärtete Wasser aus der Wasserenthärtungseinrichtung 3 abgeführt wird. Dieser Ablauf ist über eine Verbindungsleitung 24, in der ein Ventil V24 angeordnet ist, und eine Produktwasserleitung 25 mit dem Produktwasserablauf 7 verbunden, über den das in den Keimfiltern 1, 2 desinfizierte und in der Wasserenthärtungseinrichtung 3 enthärtete Produktwasser aus der Vorrichtung abgeleitet und zu einem (nicht dargestellten) Verbraucher oder einem Sammelreservoir geleitet wird.

Zweckmäßig verfügt die Vorrichtung, wie in Fig. 1 gezeigt, über eine Verschneideeinrichtung 13, mit der aus einem enthärteten Teilstrom, der durch die Wasserenthärtungseinrichtung 3 geleitet worden ist, und einem desinfizierten, jedoch noch nicht enthärteten Teilstrom ein Verschnittwasserstrom gemischt werden kann. Hierfür umfasst die Verschneideeinrichtung 13 eine am stromabwärtigen Ende der Parallelschaltung der beiden Keimfilter 1, 2 abzweigende erste Verschneideleitung 14, welche mit der Produktwasserleitung 25 in Verbindung steht und in der ein Verschneideventil 13a angeordnet ist und zur Führung eines ersten Verschneidestroms v dient. Die Verschneideeinrichtung 13 enthält einen das Verschneideventil 13a umgehenden Verschneidebypass 26 mit einem Überströmventil 26a, welches bei einem vorgegebenen Wasserdruck, der beispielsweise bei 0,8 bar liegen kann, öffnet. Die Verschneideeinrichtung 13 enthält weiterhin eine zweite Verschneideleitung 15, die zur Führung eines zweiten Verschneidestroms w dient und durch die die Verbindungsleitung 24 gebildet ist, welche den Ablauf der Wassernethärtungseinrichtung 3 mit der Produktwasserleitung 25 verbindet. Die Verschneideeinrichtung 13 vermischt einen durch die beiden Keimfilter 1, 2 und durch die erste Verschneideleitung 14 geleiteten Teilstrom (erster Verschneidestrom v) von desinfiziertem, jedoch nicht enthärtetem Wasser mit einem zweiten Teilstrom (zweiter Verschneidestrom w) von desinfiziertem und enthärtetem Wasser, welcher sowohl durch die beiden Keimfilter 1, 2 als auch durch die Wasserenthärtungseinrichtung 3 und über die zweite Verschneideleitung 15 (Verbindungsleitung 24) in die Produktwasserleitung 25 geleitet worden ist. Die Verschneidung des ersten Verschneidestroms v und des zweiten Verschneidestroms w erfolgt dabei am Zulauf der ersten Verschneideleitung 14 in die Produktwasserleitung 25, welche stromabwärts dieses Zulauf den zweiten Verschneidestrom führt.

Zur Regenerierung der Wasserenthärtungseinrichtung 3 und der beiden Keimfilter 1, 2 umfasst die in Fig. 1 schematisch dargestellte Vorrichtung eine Regeneriereinrichtung 12, welche ein Regeneriermittelreservoir 8 umfasst, in dem ein Regeneriermittel 9 bevorratet ist. Bei dem Regeneriermittel 9 handelt es sich um ein (festes) Chloridsalz und bevorzugt um Kochsalz (NaCl). Im folgenden wird ein bevorzugtes Ausführungsbeispiel der Erfindung beschrieben, in dem es sich bei dem Chloridsalz um Kochsalz handelt.

Das Regeneriermittelreservoir 8 verfügt über einen Wasserzulauf, über den Wasser in das Regeneriermittelreservoir 8 eingeleitet werden kann. Bei Einleitung von Wasser in das Regeneriermittelreservoir 8 löst sich das Regeneriermittel 9 im Wasser auf und bildet eine zweckmäßig gesättigte Regeneriersalzlösung 9', welche sich auf dem Boden des Regeneriermittelreservoirs 8 absetzt. Bei dem bevorzugtes Ausführungsbeispiel der Erfindung handelt es sich bei der Regeneriersalzlösung 9' um eine gesättigte Kochsalzsole. Zur Entnahme der Kochsalzsole umfasst die Regeneriereinrichtung 12 ein Steigrohr 26, welches am unteren Ende in die Kochsalzsole eingetaucht ist und am oberen Ende in eine Regenerierleitung 27 mündet. Zur Überführung der wässrigen Regeneriersalzlösung 9' (Kochsalzsole) in die Regenerierleitung 27 ist ein Injektor 28 vorgesehen, der eine Pumpe enthalten kann. Zweckmäßig ist der Injektor 28 als Wasserstrahlpumpe ausgebildet. Hierfür ist ein Ende der Regenerierleitung 27 mit der Produktwasserleitung 25 verbunden, so dass (nicht enthärtetes) Wasser, welches aus der Parallelschaltung der beiden Keimfilter 1, 2 ausströmt, über die Produktwasserleitung 25 in die Regenerierleitung 27 geleitet werden kann, wo an der Mündung der Steigleitung 26 aufgrund des Strömungsdrucks des durch die Regenerierleitung 27 strömenden Wassers ein Unterdruck entsteht, durch den die wässrige Regeneriersalzlösung 9' (Kochsalzsole) aus dem Regeneriermittelreservoir 8 in die Regenerierleitung 27 angesaugt wird. Dabei wird die konzentrierte Regeneriersalzlösung 9' durch das in der Regenerierleitung 27 geführte Wasser verdünnt.

In der Regenerierleitung 27 ist (in Strömungsrichtung des von der Produktwasserleitung 25 kommenden Wassers gesehen) stromabwärts des Injektors 28 eine Elektrolyseeinrichtung 10 angeordnet. Dieser wird die vom Injektor 28 aus dem Steigrohr 26 angesaugte Regeneriersalzlösung zugeführt. Die Elektrolyseeinrichtung 10 setzt die Regeneriersalzlösung 9', welche durch das über die Produktwasserleitung 25 in die Regenerierleitung 27 einströmende Wasser verdünnt wird, in eine wässrige Regenerierlösung um, welche Alkali- oder Erdalkaliionen, sowie Chlorid-Ionen aus der wässrigen Chloridsalzlösung und im Wasser als hypochlorige Säure dissoziiertes Chlorgas enthält. In dem bevorzugten Ausführungsbeispiel der Erfindung enthält die wässrige Regenerierlösung Natrium- und Chlor-Ionen der Kochsalzsole, sowie im Wasser als hypochlorige Säure dissoziiertes Chlorgas.

Zwischen der Elektrolyseeinrichtung 10 und der Wasserenthärtungseinrichtung 3 ist eine Regeneriermittelleitung 20 angeordnet, über welche die in der der Elektrolyseeinrichtung 10 erzeugte wässrige Regenerierlösung zur Wasserenthärtungseinrichtung 3 geleitet werden kann. Von der Regeneriermittelleitung 20 zweigt (in Strömungsrichtung des Wassers von der Regenerierleitung 27 zur Wasserenthärtungseinrichtung 3 aus gesehen) vor der Wasserenthärtungseinrichtung 3 eine Abzweigung 31 ab, welche ein Ventil V31 enthält und in einen Abwasserkanal 16 mündet.

Parallel zur Regenerierleitung 27 ist eine Bypassleitung 33 mit einem darin angeordneten Ventil V33 vorgesehen. Diese Bypassleitung 33 verbindet die Regeneriermittelleitung 20 mit der Produktwasserleitung 25 unter Umgebung der Regeneriereinrichtung 12.

Von der Regeneriermittelleitung 20 zweigt ferner eine Abzweigung 34 mit einem darin angeordneten Ventil V34 ab. Die Abzweigung 34 mündet in das Regeneriermittelreservoir 8.

Am stromaufwärtigen Ende der Wasserenthärtungseinrichtung 3 sind weitere Regeneriermittelleitungen 21, 22 angeordnet, welche zum jeweils stromabwärtigen Ende des ersten Keimfilters 1 und des zweiten Keimfilters 2 führen. In den Regeneriermittelleitungen 21, 22 sind Ventile V21, V22 vorgesehen.

In der in Figur 1 gezeigten Betriebsphase wird die oben beschriebene Vorrichtung zur Erzeugung von desinfiziertem und enthärtetem Wasser wie folgt betrieben:
Das zu behandelnde Rohwasser wird der Vorrichtung über den Rohwasserzulauf 6 zugeleitet und in der Parallelschaltung der beiden Keimfilter 1, 2 in zwei Teilströme a, b aufgeteilt, wobei ein erster Teilstrom a in den ersten Keimfilter 1 und ein zweiter Teilstrom b in den zweiten Keimfilter 2 geleitet wird. Dabei sind die in den Leitungen der Parallelschaltung der beiden Keimfilter 1, 2 stromaufwärts der Keimfilter 1, 2 angeordneten Ventile V1, V2 geöffnet und die in den Abzweigungen 29, 30 angeordneten Ventile V29, V30 sind geschlossen. Die beiden Teilströme a, b des Rohwassers werden unter Druck durch das Filtermaterial 5 der beiden parallel geschalteten Keimfilter 1, 2 geleitet und dort durch Elektroadsorption desinfiziert. Die stromabwärts der beiden Keimfilter 1, 2 in den Leitungen der Parallelschaltung angeordnete Ventile V3 und V4 sind geöffnet, so dass die beiden Teilströme a, b nach Durchlauf des ersten Keimfilters 1 bzw. des zweiten Keimfilters 2 am Ende der Parallelschaltung zusammen geführt werden. Ein Teil des zusammengeführten Stroms von in den Keimfiltern 1, 2 desinfiziertem Wasser wird dabei als erster Verschneidestrom v über die erste Verschneideleitung 14 direkt in die Produktwasserleitung 25 geleitet. Ein zweiter Teilstrom des in den Keimfiltern 1 und 2 desinfizierten Wassers wird über die Verbindungsleitung 32 bei geöffnetem Ventil V32 der Wasserenthärtungseinrichtung 3 zugeführt. Der über die Verbindungsleitung 32 der Wasserenthärtungseinrichtung 3 zugeführte Teilstrom des desinfizierten Wassers wird unter Druck durch das Ionenaustauscherharz 4 der Wasserenthärtungseinrichtung 3 gepresst und dadurch enthärtet.

Das am Ablauf der Wasserenthärtungseinrichtung 3 vorgesehene Ventil V24 ist in der Betriebsphase geöffnet, so dass das aus dem Ablauf der Wasserenthärtungseinrichtung 3 strömende Wasser in die Verbindungsleitung 24 (zweite Verschneideleitung 15) einströmen kann. Das von der Wasserenthärtungseinrichtung 3 in die Verbindungsleitung 24 eingeleitete enthärtete Wasser 3 wird dort als zweiter Verschneidestrom w geführt und in die Produktwasserleitung 25 eingeleitet. Der zweite Verschneidestrom w strömt schließlich in der Produktwasserleitung 25 bis zur Einmündung der ersten Verschneideleitung 14, wo der erste Verschneidestrom v (bei dem es sich um desinfiziertes, nicht enthärtetes Wasser handelt), mit dem zweiten Verschneidestrom w (bei dem es sich um desinfiziertes und enthärtetes Wasser handelt) in einem vorgegebenen Mischungsverhältnis vermischt wird. Der vermischte Produktwasserstrom, der sich aus dem ersten Verschneidestrom v und dem zweiten Verschneidestrom w zusammen setzt, wird schließlich über den Produktwasserablauf 7 aus der Vorrichtung abgeleitet.

Zur Regenerierung der beiden Keimfilter 1, 2 und der Wasserenthärtungseinrichtung 3 wird die oben beschriebene Vorrichtung in Regenerierphasen wie folgt verwendet, wobei eine gleichzeitige Regenerierung eines der beiden Keimfilter 1 oder 2 und der Wasserenthärtungseinrichtung 3 in einer einzigen Regenerierphase erfolgt. Zunächst wird hierbei eine erste Regenerierphase beschrieben, in der der erste Keimfilter 1 und die Wasserenthärtungseinrichtung 3 regeneriert werden, während der zweite Keimfilter 2 das ihm zugeführte Rohwasser desinfiziert und in den Produktwasserablauf 7 leitet. Eine zweite Regenerierphase, in der der zweite Keimfilter 2 und die Wasserenthärtungseinrichtung 3 regeneriert werden, während der erste Keimfilter 2 das ihm zugeführte Rohwasser desinfiziert und in den Produktwasserablauf 7 leitet, verläuft analog dazu.

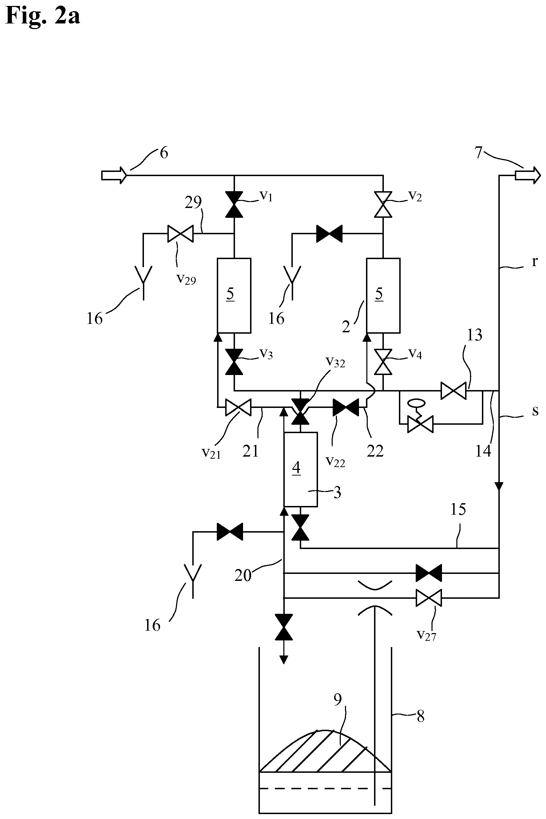

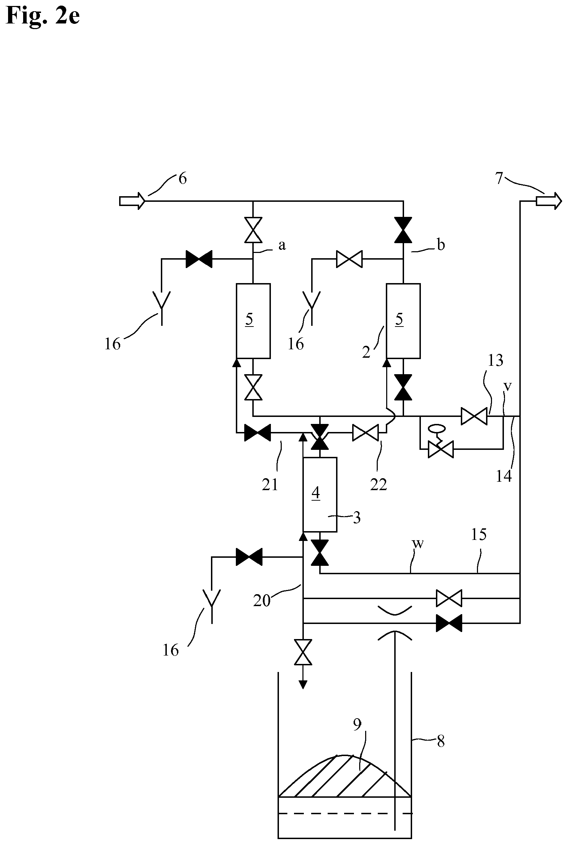

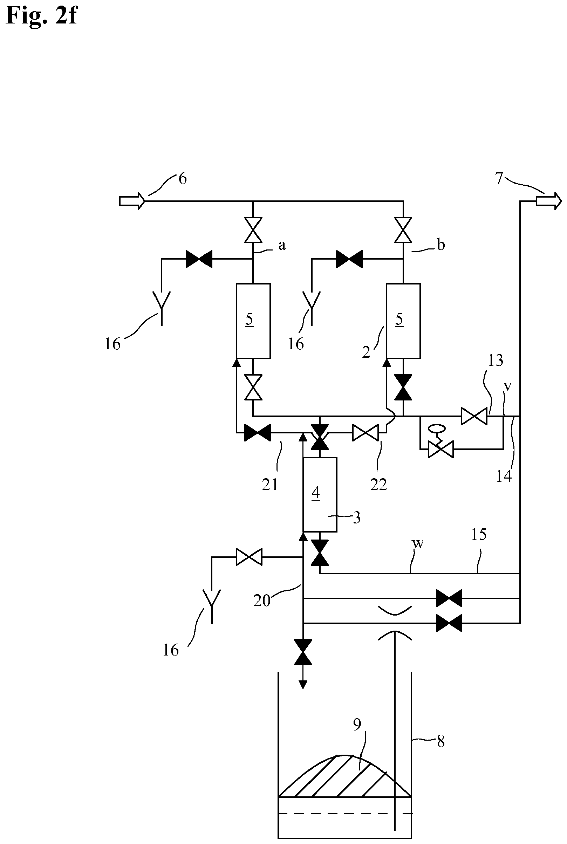

Ein erster Schritt der ersten Regenerierphase ist in Figur 2a schematisch dargestellt. In diesem ersten Schritt werden die Wasserenthärtungseinrichtung 3 und der erste Keimfilter 1 mit der wässrigen Regenerierlösung beaufschlagt. Hierfür werden das stromaufwärtige Ventil V1 und das stromabwärtige Ventil V3 des ersten Keimfilters 1 in der Leitung der Parallelschaltung geschlossen, während das zweite Ventil V2, welches stromabwärts des zweiten Keimfilters 2 in der Leitung der Parallelschaltung angeordnet ist, und das vierte Ventil V4 offen bleiben. Das der Parallelschaltung der beiden Keimfilter 1, 2 zugeleitete Rohwasser strömt deshalb nur durch den zweiten Keimfilter 2 und von dort durch das geöffnete vierte Ventil V4 und bei geöffnetem Verschneideventil 13a in die erste Verschneideleitung 14. Das in der Verbindungsleitung 32 angeordnete Ventil V32 wird in diesem Schritt der Regenerierphase geschlossen, so dass das durch den zweiten Keimfilter 2 geleitete und dort desinfizierte Wasser nicht in die Wasserenthärtungseinrichtung 3 strömen kann. Das in dem zweiten Keimfilter 2 desinfizierte Wasser strömt deshalb über die erste Verschneideleitung 14 direkt in die Produktwasserleitung 25, wo der vom zweiten Keimfilter 2 kommende desinfizierte Wasserstrom in zwei Teilströme aufgeteilt wird. Ein ersten Teilstrom r strömt dabei zum Produktwasserablauf 7 und ein zweiter Teilstrom s strömt durch die Produktwasserleitung 25 zur Regeneriereinrichtung 12 und dort in die Regenerierleitung 27. Das sich in der Regenerierleitung 27 befindliche Ventil V27 ist dabei geöffnet. Das durch die Regenerierleitung 27 strömende Wasser saugt über die oben bereits beschriebene Wirkung des Injektors 28 die (konzentrierte) Regeneriersalzlösung 9' (Kochsalzsole) aus dem Regeneriermittelreservoir 8 an und leitet diese zur Elektrolyseeinrichtung 10, welche die Regeneriersalzlösung in die wässrige Regenerierlösung umsetzt. Die wässrige Regenerierlösung enthält in dem bevorzugten Ausführungsbeispiel, bei dem es sich bei dem Regeneriermittel 9 um Kochsalz (NaCl) handelt, einerseits im Wasser gelöste Natrium- und Chlorid-Ionen sowie im Wasser als hypochlorige Säure dissoziiertes Chlorgas.

Die wässrige Regenerierlösung wird über die Regeneriermittelleitung 20 der Wasserenthärtungseinrichtung 3 zugeführt und dort unter Druck durch das Ionenaustauscherharz 4 geleitet. Dabei wird das Ionenaustauscherharz 4 regeneriert, indem die dort beim Enthärtungsvorgang angelagerten Kalzium- und Magnesiumionen von den Natrium-Ionen der wässrigen Regenerierlösung verdrängt werden und sich die Natrium-Ionen der Regenerierlösung am Ionenaustauscherharz anlagern, so dass dieses wieder eine ausreichende Austauschkapazität zur Enthärtung von Wasser aufweist.

Die durch das Ionenaustauscherharz 4 geleitete Regenerierlösung wird am stromaufwärtigen Ende der Wasserenthärtungseinrichtung 3 in die Regeneriermittelleitung 21 geleitet, welche die Wasserenthärtungseinrichtung 3 und den ersten Keimfilter 1 miteinander verbindet. Das sich in dieser Regeneriermittelleitung 21 befindliche Ventil V21 ist dabei geöffnet, während das sich in der anderen Regeneriermittelleitung 22, welche die Wasserenthärtungseinrichtung 3 mit dem zweiten Keimfilter 2 verbindet, befindliche Ventil V22 geschlossen bleibt. Über die Regeneriermittelleitung 21 wird die wässrige Regenerierlösung in den ersten Keimfilter 1 und dort durch das Filtermaterial 5 geleitet. Die wässrige Regenerierlösung führt dabei dazu, dass die am Filtermaterial 5 des ersten Keimfilters 1 adsorbierten Mikroorganismen vom Filtermaterial 5 abgelöst werden. Die Ablösung der Mikroorganismen vom Filtermaterial erfolgt dabei wahrscheinlich aufgrund elektrostatischer Verdrängungsmechanismen, die durch die in der wässrigen Regenerierlösung enthaltenen Chloridionen hervorgerufen werden, oder durch eine osmotische Reaktion in den Mikroorganismen, denen in der salzigen Umgebung der Regenerierlösung Wasser entzogen wird, wodurch sie ihre Adsorptionsfähigkeit verlieren. Gleichzeitig erfolgt ein Abtöten der Mikroorganismen in dem ersten Keimfilter 1 durch das in der wässrigen Regenerierlösung als hypochlorige Säure dissoziierte Chlorgas. Auf diese Weise wird der erste Keimfilter 1 zuverlässig entkeimt, indem einerseits die am Filtermaterial adsorbierten Mikroorganismen abgelöst und diese durch die Wirkung des Chlorgases zumindest teilweise abgetötet werden. Die zumindest teilweise abgetöteten Mikroorganismen werden mit der wässrigen Regenerierlösung aus dem ersten Keimfilter 1 abgeführt und in die Abzweigung 29 geleitet. Das in der Abzweigung 29 angeordnete Ventil V29 ist dabei geöffnet, so dass die wässrige Regenerierlösung durch das geöffnete Ventil V29 in den Abwasserkanal 16 abfließen und dadurch entsorgt werden kann.

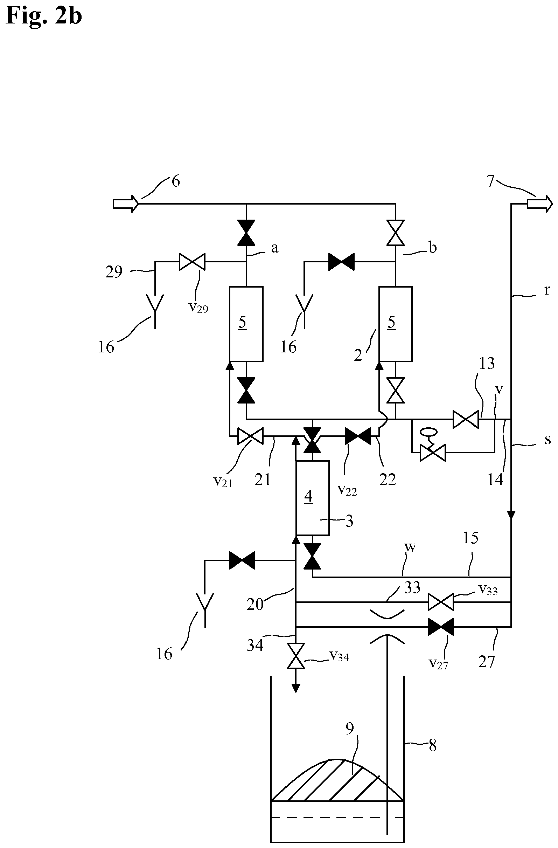

In einem zweiten Schritt der Regenerierphase zur Regeneration des ersten Keimfilters 1 und der Wasserenthärtungseinrichtung 3, welcher schematisch in Figur 2b gezeigt ist, wird die sich in den Leitungen sowie in dem ersten Keimfilter 1 und der Wasserenthärtungseinrichtung 3 befindliche wässrige Regenerierlösung ausgespült. Nach Beendigung des ersten Schritts der ersten Regenerierphase wird hierfür zunächst die Einleitung der Regeneriersalzlösung 9' mittels des Injektors 28 in die Regenerierleitung 27 gestoppt. Dies erfolgt zweckmäßig über eine automatisierte Steuerung, welche die Einleitung der konzentrierten Regeneriersalzlösung in die Regenerierleitung 27 automatisch einstellt, sobald eine vorgegebene Menge an wässriger Regeneriersalzlösung 9' in die Regenerierleitung 27 eingeleitet worden ist. Hierfür ist zweckmäßig am Injektor 28 oder in der Regenerierleitung 27 ein Durchflusssensor vorgesehen, der die in die Regenerierleitung 27 eingeleitete Menge an wässriger Regeneriersalzlösung 9' erfasst. Zur Beendigung des Einleitens weiterer Regeneriersalzlösung in die Regenerierleitung 27 ist bspw. in dem Regeneriermittelreservoir 28 ein Schwimmerventil vorgesehen, welches die Steigleitung 26 verschließt, sobald eine vorgegebene Menge an Regeneriersalzlösung 9' in die Regenerierleitung 27 eingeleitet worden ist. Gleichzeitig wird das sich in der Regenerierleitung 27 befindliche Ventil V27 geschlossen. Gleichzeitig wird die parallel zur Regenerierleitung 27 verlaufende Bypassleitung 33 durch Öffnen des Ventils V33 geöffnet, so dass eine direkte Verbindung zwischen der Produktwasserleitung 25 und der Regeneriermittelleitung 20 (unter Umgehung der Regeneriereinrichtung 12) entsteht. Der von dem zweiten Keimfilter 2 kommende (desinfizierte) Teilstrom s des im zweiten Keimfilter 2 behandelten Wassers kann somit von der Produktwasserleitung 25 durch die Bypassleitung 33 in die Regeneriermittelleitung 20 und von dort in die Wasserenthärtungseinrichtung 3 strömen.

Ein erster Teilstrom des in der Regeneriermittelleitung 20 geführten Wassers zweigt in die Abzweigung 34 ab. Das in der Abzweigung 34 vorgesehene Ventil V34 wird gleichzeitig mit dem Ventil V33 geöffnet, so dass durch die Abzweigung 34 Wasser in das Regeneriermittelreservoir 8 fließen kann. Dadurch wird der Wasservorrat im Regeneriermittelreservoir 8 wieder aufgefüllt, bis das ursprünglich darin vorhandene Niveau an konzentrierter Regeneriersalzlösung 9' wieder vorhanden ist.

Gleichzeitig strömt ein zweiter Teilstrom des in der Regeneriermittelleitung 20 geführten Wassers als Spülwasser in die Wasserenthärtungseinrichtung 3 und verdrängt dort die sich darin befindliche (restliche) Regenerierlösung. Auf diese Weise wird das Ionenaustauscherharz 4 der Wasserenthärtungseinrichtung 3 mit desinfiziertem Wasser gespült. Das durch die Wasserenthärtungseinrichtung 3 geleitete Spülwasser wird schließlich bei geöffnetem Ventil V21 und geschlossenem Ventil V22 durch die Regeneriermittelleitung 21 zum ersten Keimfilter 1 geleitet, wo das Spülwasser das Filtermaterial 5 des ersten Keimfilters 1 durchströmt, um auch den ersten Keimfilter 1 zu spülen und die sich darin befindliche (Rest)menge an wässriger Regenerierlösung zu verdrängen. Das durch den ersten Keimfilter 1 geleitete Spülwasser wird schließlich bei geöffnetem Ventil V29 über den Abzweig 29 in den Abwasserkanal 16 geleitet.

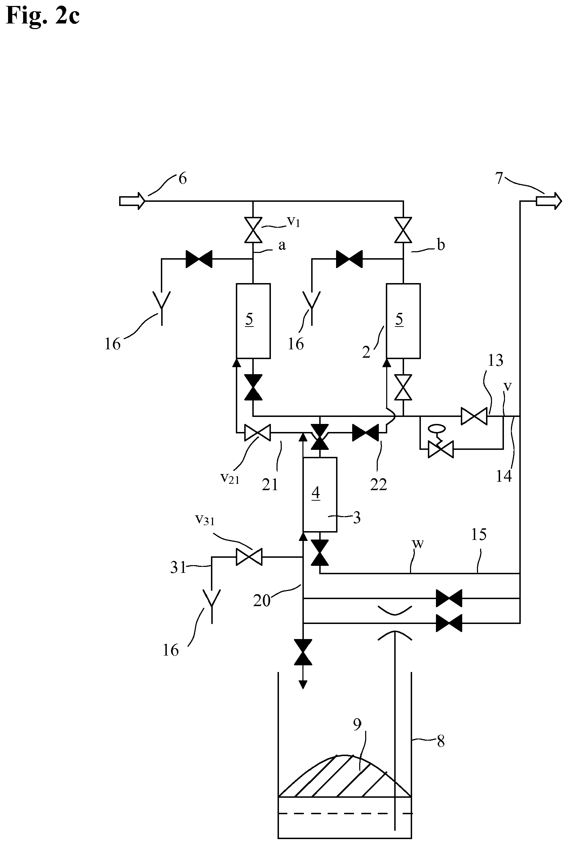

Anschließend beginnt ein in Figur 2c schematisch gezeigter dritter Schritt der ersten Regenerierphase, in dem in dem Keimfilter 1 und der Wasserenthärtungseinrichtung 3 ein Erstfiltrat erzeugt und dieses in den Abwasserkanal 16 geleitet wird. Hierfür werden die Ventile V1 und V31 geöffnet. Durch Öffnung des Ventils V1 kann Rohwasser aus dem Rohwasserzulauf 6 (auch) in den ersten Keimfilter 1 strömen. Da sich in dem ersten Keimfilter 1 noch Reste der wässrigen Regenerierlösung befinden können, wird das sich bei Durchleiten des Rohwassers durch den ersten Keimfilter 1 in diesem dritten Schritt erzeugte Erstfiltrat jedoch noch nicht dem Produktwasserablauf 7 zugeführt, sondern vielmehr zur Entsorgung in den Abwasserkanal 16 geleitet. Hierfür kann das Erstfiltrat aus dem ersten Keimfilter 1 über die geöffnete Regeneriermittelleitung 21 in die Wasserenthärtungseinrichtung 3 fließen, wo das Erstfiltrat das Ionenaustauscherharz 4 durchströmt und auch dort noch befindliche Reste der wässrigen Regenerierlösung ausspülen kann. Das Erstfiltrat kann schließlich die Wasserenthärtungseinrichtung 3 über die Regeneriermittelleitung 20 bei geöffnetem Ventil V31 durch den Abzweig 31 verlassen, der in den Abwasserkanal 16 mündet. Dabei wird das in der Abzweigung 34 angeordnete Ventil V34 geschlossen, um zu verhindern, dass das Erstfiltrat in das Regeneriermittelreservoir 8 fließen kann. Auch das in der Bypassleitung 33 angeordnete Ventil V33 wird geschlossen, damit kein Erstfiltrat in die Produktwasserleitung 25 strömen kann. Damit ist die erste Regenerierphase beendet und die Vorrichtung kann wieder in der in Fig. 1 gezeigten Betriebsphase betrieben werden, in der sich sowohl der erste Keimfilter 1 als auch der zweite Keimfilter 2 und auch die Wasserenthärtungseinrichtung 3 in Betrieb befinden, um desinfiziertes und enthärtetes Wasser zu erzeugen.

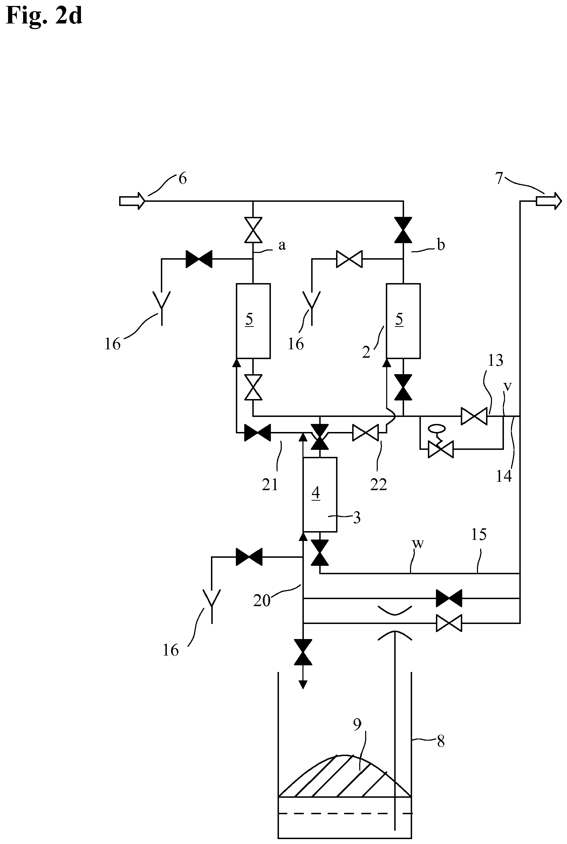

In einer zweiten Regenerierphase kann entsprechend zu der ersten Regenerierphase auch der zweite Keimfilter 2 gleichzeitig und zusammen mit der Wasserenthärtungseinrichtung 3 regeneriert werden. Die zweite Regenerierphase ist schematisch in den Figuren 2d bis 2f dargestellt.

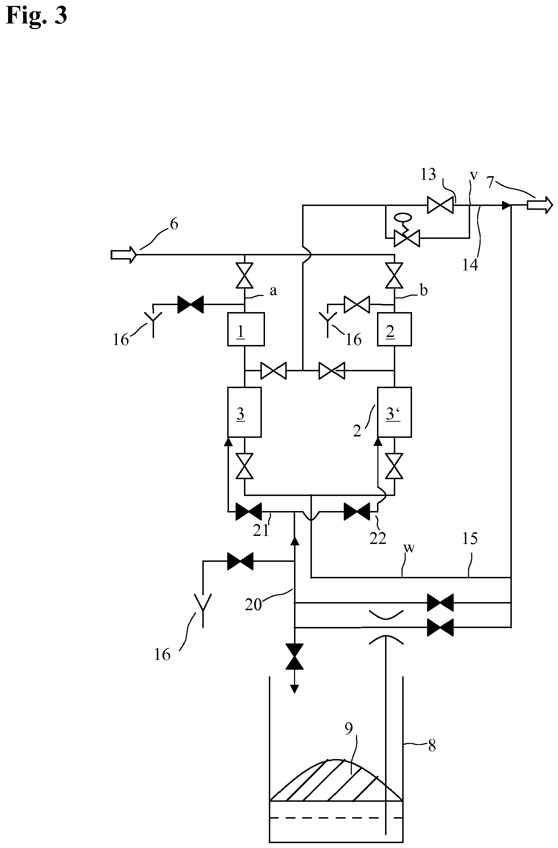

In Fig. 3 ist ein zweites Ausführungsbeispiel einer erfindungsgemäßen Vorrichtung schematisch gezeigt. In diesem Ausführungsbeispiel umfasst die Vorrichtung einen ersten Keimfilter 1, eine erste Wasserenthärtungseinrichtung 3, einen zweiten Keimfilter 2 und eine zweite Wasserenthärtungseinrichtung 3', wobei der erste Keimfilter 1 und die erste Wasserenthärtungseinrichtung 3 in einem Zweig und der zweite Keimfilter 2 und die zweite Wasserenthärtungseinrichtung 3' in einem zweiten Zweig einer Parallelschaltung angeordnet sind. In Fig. 3 ist die Vorrichtung in ihrer Betriebsphase dargestellt, welche im Wesentlichen der Betriebsphase der Vorrichtung von Fig. 1 entspricht.

Der Vorteil der Vorrichtung von Fig. 3 besteht darin, dass die Vorrichtung im Pendelbetrieb betrieben werden kann, so dass durch die beiden Wasserenthärtungseinrichtungen 3, 3' zu jeder Zeit, und insbesondere auch während der Regenerierphasen, enthärtetes Wasser bereitgestellt werden kann. Auch während der Regenerierphasen wird nämlich zumindest ein Teilstrom des Rohwassers entweder durch den ersten Keimfilter 1 und die erste Wasserenthärtungseinrichtung 3 oder durch den zweiten Keimfilter 2 und die zweite Wasserenthärtungseinrichtung 3' geleitet und dadurch sowohl desinfiziert als auch enthärtet und schließlich als Produktwasser zum Produktwasserablauf 7 geleitet. Wie in der Vorrichtung von Fig. 1 ist auch in der Vorrichtung von Fig. 3 zweckmäßig eine Verschneideeinrichtung 13 vorgesehen, welche einen ersten Teilstrom von desinfiziertem, jedoch nicht enthärtetem Wasser mit einem zweiten Teilstrom von desinfiziertem und enthärtetem Wasser zur Erzeugung eines Verschnittwasserstroms in einem vorgegebenen Mischverhältnis vermischt.

Die Erfindung ist nicht auf die zeichnerisch dargestellten und oben beschriebenen Ausführungsbeispiele beschränkt. So ist es beispielsweise möglich, von den Vorteilen der Erfindung auch in einer Vorrichtung Gebrauch zu machen, welche lediglich einen einzigen (ersten) Keimfilter 1 und eine dazu in Reihe geschaltete Wasserenthärtungseinrichtung 3 umfasst. Auch in einer solchen Vorrichtung kann auf sehr effiziente und zeitsparende Weise eine gleichzeitige Regenerierung des Keimfilters und der Wasserenthärtungseinrichtung in einer (einzigen) Regenerierphase erfolgen. Die oben beschriebenen und zeichnerisch in den Fig. 1 bis 3 dargestellten Ausführungsbeispiele einer erfindungsgemäßen Vorrichtung weisen jedoch den Vorteil auf, dass auch während der Regenerierphase ein zweiter Keimfilter und/ oder eine zweite Wasserenthärtungseinrichtung 3 zur Behandlung des Rohwassers und zur Erzeugung von desinfiziertem bzw. enthärtetem Wasser zur Verfügung steht.

## Patentansprüche

1. Vorrichtung zur Wasserbehandlung, mit mindestens einem ersten Keimfilter (1) und einer Wasserenthärtungseinrichtung (3), welche ein regenerierbares Ionenaustauscherharz (4) enthält, wobei die Wasserenthärtungseinrichtung (3) und der Keimfilter (1) mit einem Regeneriermittelreservoir (8) in Verbindung stehen und die Vorrichtung so eingerichtet ist, dass ein in dem Regeneriermittelreservoir (8) bevorratetes Regeneriermittel (9) in einer Regenerierphase sowohl der Wasserenthärtungseinrichtung (3) als auch dem wenigstens einen Keimfilter (1) zugeführt wird, um das Ionenaustauscherharz (4) der Wasserenthärtungseinrichtung (3) und den Keimfilter (1) zu regenerieren, **dadurch gekennzeichnet, dass** der erste Keimfilter (1) ein Adsorptionsfilter mit einem elektroaktiven Filtermaterial (5) ist, welches in wässriger Umgebung ein elektrokinetisches Potential aufweist, so dass sich in dem zu behandelnden Wasser enthaltene Bakterien oder Viren durch elektrostatische Adsorption an dem Filtermaterial (5) anlagern und dass das Regeneriermittelreservoir (8) mit einer Elektrolyseeinrichtung (10) gekoppelt ist, wobei die Vorrichtung so eingerichtet ist, dass der Elektrolyseeinrichtung (10) eine wässrige Lösung eines Chloridsalzes aus dem Regeneriermittelreservoir (8) zugeführt wird, und die Elektrolyseeinrichtung (10) zur Umsetzung der Chloridsalzlösung in eine wässrige Regenerierlösung ausgebildet ist, wobei die wässrige Regenerierlösung Alkali- oder Erdalkali- sowie Chlorid-Ionen und im Wasser als hypochlorige Säure dissoziiertes Chlorgas enthält.

2. Vorrichtung nach Anspruch 1, **gekennzeichnet durch** einen zweiten Keimfilter (2), der in einer Parallelschaltung zum ersten Keimfilter (1) angeordnet ist, wobei die Wasserenthärtungseinrichtung (3) in Serie zur Parallelschaltung des ersten Keimfilters (1) und des zweiten Keimfilter (2) geschaltet ist.

3. Vorrichtung nach Anspruch 1 oder 2, **dadurch gekennzeichnet, dass** der erste Keimfilter (1) und/oder der zweite Keimfilter (2) ein elektroaktives Filtermaterial (5) mit einem in wässriger Umgebung elektropositiven Potential (Zeta-Potential) enthält.

4. Vorrichtung nach einem der voranstehenden Ansprüche, **dadurch gekennzeichnet, dass** die Vorrichtung einen Rohwasserzulauf (6) und einen Produktwasserablauf (7) aufweist und dass der erste Keimfilter (1) oder die beiden parallel geschalteten Keimfilter (1, 2) stromaufwärts mit dem Rohwasserzulauf (6) und stromabwärts mit der Wasserenthärtungseinrichtung (3) in Verbindung stehen und die Wasserenthärtungseinrichtung (3) stromabwärts mit dem Produktwasserablauf (7) verbunden ist.

5. Vorrichtung nach einem der Ansprüche 2 bis 4, wobei die Vorrichtung so eingerichtet ist, dass in einer Betriebsphase der Vorrichtung zum Enthärten und Desinfizieren des über den Rohwasserzulauf (6) zugeführten Wassers der Wasserstrom zunächst in zwei Teilströme (a, b) aufgeteilt und ein erster Teilstrom (a) durch den ersten Keimfilter (1) und ein zweiter Teilstrom (b) durch den zweiten Keimfilter (2) geleitet wird und die beiden Teilströme (a, b) stromabwärts der Keimfilter (1, 2) in die Wasserenthärtungseinrichtung (3) geleitet werden und das in der Wasserenthärtungseinrichtung (3) enthärtete Wasser schließlich zum Produktwasserablauf (7) geleitet wird.

6. Vorrichtung nach einem der voranstehenden Ansprüche, wobei es sich bei dem im Regeneriermittelreservoir (8) bevorrateten Regeneriermittel (9) um eine gesättigte Kochsalzsole handelt.

7. Vorrichtung nach einem der voranstehenden Ansprüche, **dadurch gekennzeichnet, dass** das Regeneriermittelreservoir (8) eine gesättigte oder verdünnte Kochsalzsole enthält.

8. Vorrichtung nach einem der Ansprüche 2 bis 7, **dadurch gekennzeichnet, dass** die Wasserenthärtungseinrichtung (3) und die beiden Keimfilter (1, 2) jeweils mit Regeneriermittelleitungen (20, 21, 22) verbunden sind, wobei die Vorrichtung so eingerichtet ist, dass das Regeneriermittel (9), insbesondere die wässrige Regenerierlösung, über die Regeneriermittelleitungen (20, 21, 22) der Wasserenthärtungseinrichtung (3) bzw. den Keimfiltern (1, 2) in einer Regenerierphase zugeführt wird.

9. Vorrichtung nach einem der voranstehenden Ansprüche, **gekennzeichnet durch** eine Verschneideeinrichtung (13) sowie eine erste Verschneideleitung (14), welche zwischen der Wasserenthärtungseinrichtung (3) und dem ersten Keimfilter (1) oder der Parallelschaltung der beiden Keimfiltern (1, 2) angeordnet ist, und eine zweite Verschneideleitung (15), welche stromabwärts der Wasserenthärtungseinrichtung (3) angeordnet ist, wobei die Vorrichtung so eingerichtet ist, dass der Verschneideeinrichtung (13) über die erste Verschneideleitung (14) ein erster Verschneidestrom (v) von nicht enthärtetem Wasser und über die zweite Verschneideleitung (15) ein zweiter Verschneidestrom (w) von enthärtetem Wasser zugeführt wird und die Verschneideeinrichtung (13) den ersten Verschneidestrom (v) und den zweiten Verschneidestrom (w) in einem vorgegebenen Mischverhältnis vermischt.

10. Vorrichtung nach einem der Ansprüche 2 bis 9, **gekennzeichnet durch** eine erste Wasserenthärtungseinrichtung (3) und eine zweite Wasserenthärtungseinrichtung (3'), wobei der erste Keimfilter (1) und die erste Wasserenthärtungseinrichtung (3) in einem ersten Zweig (a) und der zweite Keimfilter (2) und die zweite Wasserenthärtungseinrichtung (3') in einem zweiten Zweig (b) einer Parallelschaltung angeordnet sind und in einem Pendelbetrieb betreibbar sind.

11. Verfahren zur Regenerierung einer Vorrichtung zur Wasserbehandlung mit wenigstens einem Keimfilter (1, 2) und einer Wasserenthärtungseinrichtung (3) mit einem regenerierbaren Ionenaustauscherharz (4), wobei in einer Regenerierphase ein in einem Regeneriermittelreservoir (8) bevorratetes Regeneriermittel (9) sowohl der Wasserenthärtungseinrichtung (3) als auch dem wenigstens einen Keimfilter (1) zugeführt wird, um das Ionenaustauscherharz (4) der Wasserenthärtungseinrichtung (3) und den Keimfilter (1) gleichzeitig zu regenerieren, **dadurch gekennzeichnet, dass** der erste Keimfilter (1) ein Adsorptionsfilter mit einem elektroaktiven Filtermaterial (5) ist, welches in wässriger Umgebung ein elektrokinetisches Potential aufweist, so dass sich in dem zu behandelnden Wasser enthaltene Bakterien oder Viren durch elektrostatische Adsorption an dem Filtermaterial (5) anlagern und dass das im Regeneriermittelreservoir (8) bevorratete Regeneriermittel (9) in Form einer wässrigen Lösung eines Chloridsalzes vorliegt und verdünnt oder unverdünnt einer Elektrolyseeinrichtung (10) zugeführt wird, welche die Chloridsalzlösung in eine wässrige Regenerierlösung umsetzt, wobei die wässrige Regenerierlösung Alkali- oder Erdalkali-Ionen, insbesondere Natriumionen, sowie Chlorid-Ionen und im Wasser als hypochlorige Säure dissoziiertes Chlorgas enthält.

12. Verfahren nach Anspruch 11, wobei ein zweiter Keimfilter (2) in einer Parallelschaltung zum ersten Keimfilter (1) angeordnet ist und die Wasserenthärtungseinrichtung (3) in Serie zur Parallelschaltung des ersten Keimfilters (1) und des zweiten Keimfilter (2) geschaltet ist.

13. Verfahren nach Anspruch 11 oder 12, **dadurch gekennzeichnet, dass** die wässrige Regenerierlösung in der Regenerierphase zunächst durch die Wasserenthärtungseinrichtung (3) und danach durch den ersten Keimfilter (1) oder einen der beiden parallel geschalteten Keimfilter (1, 2) geleitet wird.

14. Verfahren nach einem der Ansprüche 12 oder 13, **dadurch gekennzeichnet, dass** in der Regenerierphase das Regeneriermittel durch das Ionenaustauscherharz (4) der Wasserenthärtungseinrichtung (3) und nur einen der beiden parallel geschalteten Keimfilter (1 oder 2) geleitet wird, während der andere Keimfilter (2 oder 1) von Rohwasser durchströmt wird, um dieses zu desinfizieren.

## Claims

1. Device for water treatment having at least one first germ filter (1) and a water softening device (3) which contains a regeneratable ion exchange resin (4), wherein in a regenerating phase, the water softening device (3) and the germ filter (1) are connected to a regenerating means reservoir (8) and the device is equipped so that a regenerating means (9) stored in the regenerating means reservoir (8) is supplied both to the water softening device (3) and to the at least one germ filter (1) in order to regenerate the ion exchange resin (4) of the water softening device (3) and the germ filter (1), **characterised in that** the first germ filter (1) is an adsorption filter with an electroactive filter material (5) which has an electrokinetic potential in an aqueous environment so that bacteria or viruses present in the water to be treated are accumulated on the filter material (5) by electrostatic adsorption and **in that** the regenerating means reservoir (8) is coupled to an electrolysis device (10), wherein the device is equipped so that an aqueous solution of a chloride salt is supplied from the regenerating means reservoir (8) to the electrolysis device (10), and the electrolysis device (10) is designed to convert the chloride salt solution to an aqueous regenerating solution, wherein the aqueous regenerating solution contains alkali metal ions or alkaline earth metal ions as well as chloride ions and chlorine gas dissociated in the water as hypochlorous acid.

2. Device according to claim 1, **characterised by** a second germ filter (2) which is arranged in parallel connection to the first germ filter (1), wherein the water softening device (3) is connected in series for parallel connection of the first germ filter (1) and of the second germ filter (2).

3. Device according to claim 1 or 2, **characterised in that** the first germ filter (1) and/or the second germ filter (2) contains an electroactive filter material (5) with an electropositive potential (zeta potential) in an aqueous environment.

4. Device according to one of the preceding claims, **characterised in that** the device has an untreated water feed (6) and a product water discharge (7) and **in that** the first germ filter (1) or the two germ filters (1, 2) connected in parallel are connected upstream to the untreated water feed (6) and downstream to the water softening device (3) and the water softening device (3) is connected downstream to the product water discharge (7).

5. Device according to one of claims 2 to 4, wherein the device is equipped so that in an operating phase of the device for softening and disinfecting water supplied via the untreated water feed (6), the water stream is initially divided into two part streams (a, b) and a first part stream (a) is passed through the first germ filter (1) and a second part stream (b) through the second germ filter (2) and the two part streams (a, b) are passed into the water softening device (3) downstream of the germ filters (1, 2) and the water softened in the water softening device (3) is passed finally to the product water discharge (7).

6. Device according to one of the preceding claims, wherein the regenerating means (9) stored in the regenerating means reservoir (8) is a saturated salt water sole.

7. Device according to one of the preceding claims, **characterised in that** the regenerating means reservoir (8) contains a saturated or diluted salt water sole.

8. Device according to one of claims 2 to 7, **characterised in that** the water softening device (3) and the two germ filters (1, 2) are connected respectively to regenerating means pipes (20, 21, 22), wherein the device is equipped so that the regenerating means (9), in particular the aqueous regenerating solution, is supplied to the water softening device (3) or the germ filters (1, 2) via the regenerating means pipes (20, 21, 22) in a regenerating phase.

9. Device according to one of the preceding claims, **characterised by** a diluting device (13) as well as a first diluting pipe (14) which is arranged between the water softening device (3) and the first germ filter (1) or the parallel connection of the two germ filters (1, 2), and a second diluting pipe (15) which is arranged downstream of the water softening device (3), wherein the device is equipped so that a first diluting stream (v) of non-softened water is supplied via the first diluting pipe (14) and a second diluting stream (w) of softened water via the second diluting pipe (15) to the diluting device (13) and the diluting device (13) mixes the first diluting stream (v) and the second diluting stream (w) in a predetermined mixing ratio.

10. Device according to one of claims 2 to 9, **characterised by** a first water softening device (3) and a second water softening device (3'), wherein the first germ filter (1) and the first water softening device (3) are arranged in a first branch (a) and the second germ filter (2) and the second water softening device (3') are arranged in a second branch (b) of a parallel connection and can be operated in reciprocating operation.

11. Method for regenerating a device for water treatment having at least one germ filter (1, 2) and a water softening device (3) with a regeneratable ion exchange resin (4), wherein in a regenerating phase, a regenerating means (9) stored in a regenerating means reservoir (8) is supplied both to the water softening device (3) and to the at least one germ filter (1) in order to regenerate the ion exchange resin (4) of the water softening device (3) and the germ filter (1) at the same time, **characterised in that** the first germ filter (1) is an adsorption filter with an electroactive filter material (5) which has an electrokinetic potential in an aqueous environment so that bacteria or viruses present in the water to be treated are accumulated on the filter material (5) by electrostatic adsorption and **in that** the regenerating means (9) stored in the regenerating means reservoir (8) is present in the form of an aqueous solution of a chloride salt and diluted or undiluted is supplied to an electrolysis device (10) which converts the chloride salt solution to an aqueous regenerating solution, wherein the aqueous regenerating solution contains alkali metal ions or alkaline earth metal ions, in particular sodium ions, as well as chloride ions and chlorine gas dissociated in the water as hypochlorous acid.

12. Method according to claim 11, wherein a second germ filter (2) is arranged in parallel connection to the first germ filter (1) and the water softening device (3) is connected in series for parallel connection of the first germ filter (1) and of the second germ filter (2).

13. Method according to claim 11 or 12, **characterised in that** the aqueous regenerating solution in the regenerating phase is first of all passed through the water softening device (3) and then through the first germ filter (1) or one of the two germ filters (1, 2) connected in parallel.

14. Method according to one of claims 12 or 13, **characterised in that** in the regenerating phase, the regenerating means is passed through the ion exchange resin (4) of the water softening device (3) and only one of the two germ filters (1 or 2) connected in parallel, while the other germ filter (2 or 1) is flowed through by untreated water in order to disinfect the latter.

## Revendications

1. Dispositif de traitement d'eau, avec au moins un premier filtre anti-germes (1) et un adoucisseur d'eau (3), lequel contient une résine échangeuse d'ions (4) pouvant être régénérée, dans lequel l'adoucisseur d'eau (3) et le filtre anti-germes (1) sont reliés à un réservoir d'agent de régénération (8) et le dispositif est conçu de sorte qu'un agent de régénération (9) stocké dans le réservoir d'agent de régénération (8) est amené dans une phase de régénération aussi bien à l'adoucisseur d'eau (3) qu'à l'au moins un filtre anti-germes (1), afin de régénérer la résine échangeuse d'ions (4) de l'adoucisseur d'eau (3) et le filtre anti-germes (1), **caractérisé en ce que** le premier filtre anti-germes (1) est un filtre d'adsorption avec un matériau filtrant (5) électroactif, lequel présente en milieu aqueux un potentiel électrocinétique, de sorte que des bactéries ou virus contenus dans l'eau à traiter se fixent sur le matériau filtrant (5) par adsorption électrostatique, et que le réservoir d'agent de régénération (8) est couplé à un système d'électrolyse (10), dans lequel le dispositif est conçu de sorte qu'une solution aqueuse d'un sel de chlorure est amenée du réservoir d'agent de régénération (8) au système d'électrolyse (10), et le système d'électrolyse (10) est conçu pour convertir la solution de sel de chlorure en solution de régénération aqueuse, dans lequel la solution de régénération aqueuse contient des ions alcalins ou alcalino-terreux ainsi que chlorure et du chlore gazeux dissocié dans l'eau en tant qu'acide hypochloreux.

2. Dispositif selon la revendication 1, **caractérisé par** un second filtre anti-germes (2), qui est disposé dans un montage parallèle par rapport au premier filtre anti-germes (1), dans lequel l'adoucisseur d'eau (3) est monté en série par rapport au montage parallèle du premier filtre anti-germes (1) et du second filtre anti-germes (2).

3. Dispositif selon la revendication 1 ou 2, **caractérisé en ce que** le premier filtre anti-germes (1) et/ou le second filtre anti-germes (2) contient un matériau filtrant (5) électroactif avec un potentiel électropositif (potentiel zêta) en milieu aqueux.

4. Dispositif selon l'une quelconque des revendications précédentes, **caractérisé en ce que** le dispositif présente une arrivée d'eau brute (6) et une évacuation d'eau produite (7) et que le premier filtre anti-germes (1) ou les deux filtres anti-germes (1, 2) montés en parallèle sont reliés en amont à l'arrivée d'eau brute (6) et en aval à l'adoucisseur d'eau (3) et l'adoucisseur d'eau (3) est raccordé en aval à l'évacuation d'eau produite (7).

5. Dispositif selon l'une des revendications 2 à 4, dans lequel le dispositif est conçu de sorte que, dans une phase de fonctionnement du dispositif destiné à adoucir et désinfecter l'eau amenée par l'intermédiaire de l'arrivée d'eau brute (6), le courant d'eau est tout d'abord divisé en deux courants partiels (a, b) et un premier courant partiel (a) est guidé à travers le premier filtre anti-germes (1) et un second courant partiel (b) à travers le second filtre anti-germes (2) et les deux courants partiels (a, b) sont guidés dans l'adoucisseur d'eau (3) en aval des filtres anti-germes (1, 2) et l'eau adoucie dans l'adoucisseur d'eau (3) est guidée exclusivement vers l'évacuation d'eau produite (7).

6. Dispositif selon l'une quelconque des revendications précédentes, dans lequel l'agent de régénération (9) stocké dans le réservoir d'agent de régénération (8) est une saumure de chlorure de sodium saturée.

7. Dispositif selon l'une quelconque des revendications précédentes, **caractérisé en ce que** le réservoir d'agent de régénération (8) contient une saumure de chlorure de sodium saturée ou diluée.

8. Dispositif selon l'une quelconque des revendications 2 à 7, **caractérisé en ce que** l'adoucisseur d'eau (3) et les deux filtres anti-germes (1, 2) sont raccordés respectivement à des conduites d'agent de régénération (20, 21, 22), dans lequel le dispositif est conçu de sorte que l'agent de régénération (9), en particulier la solution de régénération aqueuse, est amené dans une phase de régénération à l'adoucisseur d'eau (3) ou aux filtres anti-germes (1, 2) par l'intermédiaire des conduites d'agent de régénération (20, 21, 22).

9. Dispositif selon l'une quelconque des revendications précédentes, **caractérisé par** un système de coupage (13) ainsi qu'une première conduite de coupage (14), laquelle est disposée entre l'adoucisseur d'eau (3) et le premier filtre anti-germes (1) ou le montage parallèle des deux filtres anti-germes (1, 2), et une seconde conduite de coupage (15), laquelle est disposée en aval de l'adoucisseur d'eau (3), dans lequel le dispositif est conçu de sorte que sont amenés au système de coupage (13) un premier courant de coupage (v) d'eau non adoucie par l'intermédiaire de la première conduite de coupage (14) et un second courant de coupage (w) d'eau adoucie par l'intermédiaire de la seconde conduite de coupage (15), et le système de coupage (13) mélange le premier courant de coupage (v) et le second courant de coupage (w) dans un rapport de mélange prédéfini.

10. Dispositif selon l'une quelconque des revendications 2 à 9, **caractérisé par** un premier adoucisseur d'eau (3) et un second adoucisseur d'eau (3'), dans lequel le premier filtre anti-germes (1) et le premier adoucisseur d'eau (3) sont disposés dans une première branche (a) et le second filtre anti-germes (2) et le second adoucisseur d'eau (3') sont disposés dans une seconde branche (b) d'un montage en parallèle et peuvent fonctionner dans un mode pendulaire.

11. Procédé pour la régénération d'un dispositif pour le traitement d'eau avec au moins un filtre anti-germes (1, 2) et un adoucisseur d'eau (3) avec une résine échangeuse d'ions (4) pouvant être régénérée, dans lequel un agent de régénération (9) stocké dans un réservoir d'agent de régénération (8) est amené dans une phase de régénération aussi bien à l'adoucisseur d'eau (3) qu'à l'au moins un filtre anti-germes (1), afin de régénérer en même temps la résine échangeuse d'ions (4) de l'adoucisseur d'eau (3) et le filtre anti-germes (1), **caractérisé en ce que** le premier filtre anti-germes (1) est un filtre d'adsorption avec un matériau filtrant (5) électroactif, lequel présente en milieu aqueux un potentiel électrocinétique, de sorte que des bactéries ou virus contenus dans l'eau à traiter se fixent sur le matériau filtrant (5) par adsorption électrostatique, et que l'agent de régénération (9) stocké dans le réservoir d'agent de régénération (8) est présent sous forme d'une solution aqueuse d'un sel de chlorure et amené dilué ou non dilué à un système d'électrolyse (10), lequel convertit la solution de sel de chlorure en solution de régénération aqueuse, dans lequel la solution de régénération aqueuse contient des ions alcalins ou alcalino-terreux, en particulier des ions sodium, ainsi que des ions chlorure et du chlore gazeux dissocié dans l'eau en tant qu'acide hypochloreux.

12. Procédé selon la revendication 11, dans lequel un second filtre anti-germes (2) est disposé dans un montage parallèle par rapport au premier filtre anti-germes (1) et l'adoucisseur d'eau (3) est monté en série par rapport au montage parallèle du premier filtre anti-germes (1) et du second filtre anti-germes (2) .

13. Procédé selon la revendication 11 ou 12, **caractérisé en ce que** la solution de régénération aqueuse, dans la phase de régénération, est tout d'abord guidée à travers l'adoucisseur d'eau (3) puis à travers le premier filtre anti-germes (1) ou l'un des deux filtres anti-germes (1, 2) montés en parallèle.

14. Procédé selon l'une quelconque des revendications 12 ou 13, **caractérisé en ce que**, dans la phase de régénération, l'agent de régénération est guidé à travers la résine échangeuse d'ions (4) de l'adoucisseur d'eau (3) et un seul des deux filtres anti-germes (1 ou 2) montés en parallèle, tandis que l'autre filtre anti-germes (2 ou 1) est traversé par l'eau brute, afin de désinfecter celle-ci.
